# EUROPEAN PATENT APPLICATION

(11) **EP 2 711 507 A2**
(43) Date of publication of application: **26.03.2014**
(21) Application number: 13075062.3
(22) Date of filing: 10.09.2013
(51) Int. Cl.: F01K 7/22, F01K 23/10, F22B 1/18

(54) **Combined-cycle plant**

(30) Priority: 19.09.2012 UA 2012010927
(71) Applicant: Zagoruyko, Alexey, Minsk (BY)
(72) Inventor: Zagoruyko, Alexey, Minsk (BY); Zagoruyko, Alexey, Minsk (BY)
(74) Representative: Teleisiene, Stanislava

(57) **Abstract**

A combined-cycle plant, which may be used on thermal power stations, comprisng a gas turbine unit (1), a waste-heat steam boiler (6) connected with it along the gas circuit by transitional waste-heat flue and comprising two or more steam-water lines of different pressure levels, a steam turbine unit (10) connected to the steam-water lines by steam and water pipes, a condenser (13), a condensate pump (14), a feed pump (20), a deaerator (18), a waste gas flue, a smoke flue and junction pipes. The steam turbine unit contains a steam turbine of one pressure level. The steam-water line of lower pressure level of the waste-heat boiler is connected with the adjacent steam water line of higher pressure level by jet apparatus. The technical result is the downsizing of a combined-cycle plant while increasing its reliability.

## Description

An invention refers to heat and electric energy production based on installations operating at binary cycle with combined using of gas turbine units and steam turbine units.

Currently in use combined-cycle plant, that includes gas turbine unit, waste-heat steam boiler connected with it along the gas circuit by transitional waste-heat flue, steam turbine unit connected with waste-heat steam boiler by steam and water pipes, condenser, condensate pump, feed water pump, degasifier, junction line (patent in Russia Nº2403407, international patent classification F01K23/10, date of publication 10.11.2010). Waste-heat steam boiler has steam water line of one pressure level and gas turbine unit has steam turbine of one pressure level.

The disadvantage of currently in use combined-cycle plant is inefficient use of exhaust gases heat, which causes its low economic efficiency.

More effective use of exhaust gases heat is implemented in steam turbine with waste-heat steam boiler that has several pressure levels and correspondingly several steam-water lines, connected with steam turbine unit.

The closest analogy of the invention being claimed is steam-gas unit currently in use that contains gas turbine unit, waste-heat steam boiler connected with it along the gas circuit by transitional waste-heat flue that has at least two steam-water lines of different pressure levels, steam turbine unit connected to the steam-water lines by steam and water pipes, condenser, condensate pump, feed water pump, degasifier, waste gas flue, smoke flue, junction lines ( Tsanev S. V., Burov V. D., Remezov A. N. Gas turbine units and steam turbine units of thermal electrical stations. Moscow; Moscow Power Engineering Institute 2002, page. 278, 282). The plant being currently in use has waste steam boiler that has two (in second variant - three) pressure levels and the same number of steam water lines that provide for steam turbine unit operation. Steam-turbine unit, in one variant, has a steam-turbine of two pressure levels (equipped by two steam supplies of high and low pressure), in the second variant - steam-turbine of three pressure levels (equipped by three steam supplies of high, medium and low pressure). Each denoted steam-turbine supply is connected with its steam-water line of waste-heat steam boiler by steam and water pipes. This combined-cycle plant is more effective in comparison with the one described above.

The main disadvantage of the combined-cycle plant currently in use is its technological ineffectiveness expressed in excessive bulkiness of steam turbine connection diagram caused by large number of connection pipes and fittings that, as a result, reduces plant's performance reliability and consequently increases the cost of plant and its maintenance during the operation process.

The task of the invention is downsizing and increasing of combined-cycle plant reliability by optimization of steam-turbine connection diagram by reducing the number of connection pipes with preservation of high thermodynamic effectiveness of combined-cycle plant in whole.

Given task is achieved, as in currently in use combined-cycle plant, that contains gas turbine unit, waste-heat steam boiler that has at least two steam-water lines of different pressure levels connected with gas turbine along the gas circuit with the help of transitional waste-heat flue, steam turbine unit connected to the steam-water lines by steam and water pipes, condenser, condensate pump, feed water pump, degasifier, waste gas flue, smoke flue, junction lines, according to the appearing invention, steam-turbine unit has a steam-turbine of one pressure level, herein steam water line of lower pressure level is connected with adjacent steam water line of higher pressure level by at least one jet apparatus.

Possible construction of combined-cycle plant with jet apparatus constructed with ability to use steam as operating environment.

Possible construction of combined-cycle plant with jet apparatus constructed with ability to use water as operating environment.

Recommended construction of combined-cycle plant with waste-heat steam boiler equipped by condensate gas heater of steam turbine unit.

Allowable construction of combined-cycle plant equipped by additional superheater of steam supplied from waste-heat steam boiler to the plant.

Possible construction of combined-cycle plant with at least one steam water line developed with ability of steam extraction out of it.

Recommended construction of combined-cycle plant with gas turbine unit equipped by additional line of steam reheating.

Technical result is downsizing of combined-cycle plant by reduction of the number of connection pipes between waste-heat steam boiler and steam turbine unit by means of connection with the help of jet apparatus of steam water lines with different pressure levels. In its turn it allows to increase reliability of combined-cycle plant, decrease its cost and cost of its maintenance during operation process.

Additionally it becomes possible to reduce material and financial expenses of applied plant assembling during reconstruction of old heat power-stations by using already available on the stations combined-cycle plants with one pressure level.

Construction of jet apparatus with ability to use steam or water as operating environment allows flexibly change the combined-cycle plant's scheme (for example, adjusting it to each specific heat power station).

Equipping of applied apparatus with condensate gas heater installed in waste-heat steam boiler and with steam superheater allows to increase its effectiveness and efficiency.

Construction of applied combined-cycle plant is illustrated on figures:
fig. 1 - diagram of combined-cycle plant with waste-heat steam boiler of two pressure levels and water jet apparatus;
fig. 2 - diagram of combined-cycle plant with waste-heat steam boiler of two pressure levels and steam jet apparatus;
fig. 3 - diagram of combined-cycle plant with waste-heat steam boiler of three pressure levels and water jet apparatus;
fig. 4 - diagram of combined-cycle plant with waste-heat steam boiler of three pressure levels, water jet apparatus and steam jet apparatus;

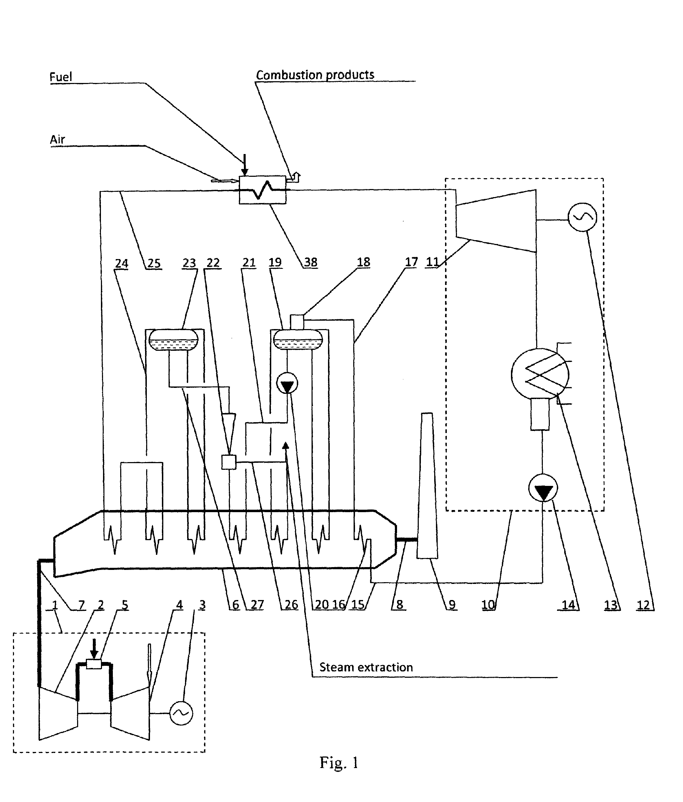

Illustrated on fig. 1 combined-cycle plant is equipped with a gas turbine unit 1 that contains gas turbine 2 with electric power generator 3 and compressor 4 as well as combustion unit 5 between them. Waste-heat steam boiler 6 of two pressure levels (low and high) is connected with gas turbine unit 1 by transitional gas flue 7. Waste-heat boiler 6 also connected by waste-gas flue 8 with smoke flue 9. Combined-cycle plant contains steam turbine unit 10, which contains steam turbine 11, that is turbine of one pressure level, electric power generator 12, condenser 13, condensate pump 14.

Waste-heat boiler 6 has two steam-water lines: steam-water line of low pressure connected with steam turbine unit 10 by full-flow condensate 15 and steam-water line of high pressure connected with steam turbine unit 10 by steam pipe 25. Superheater 38 may be installed on the pipe 25

Steam-water line of low pressure consists of: pipe 15, condensate heater 16 installed in waste-heat boiler 6, pipe 17, deaerator 18 connected with drum of low pressure 19, additional pipes. It's possible to install deaerator 18 not connected with drum of low pressure 19.

Steam-water line of low pressure consists of: drum of high pressure 23, pipe 24, pipe 25, additional superheater 38 (when it is available in the installation structure), additional pipes.

Both steam-water lines are connected against each other by feed water pump 20, water jet apparatus 22 installed on pipe 21, jet apparatus 22 hooked-up with a help of pipe 26 to the steam-water line of low pressure and with a help of pipe 27 to the drum of high pressure 23.

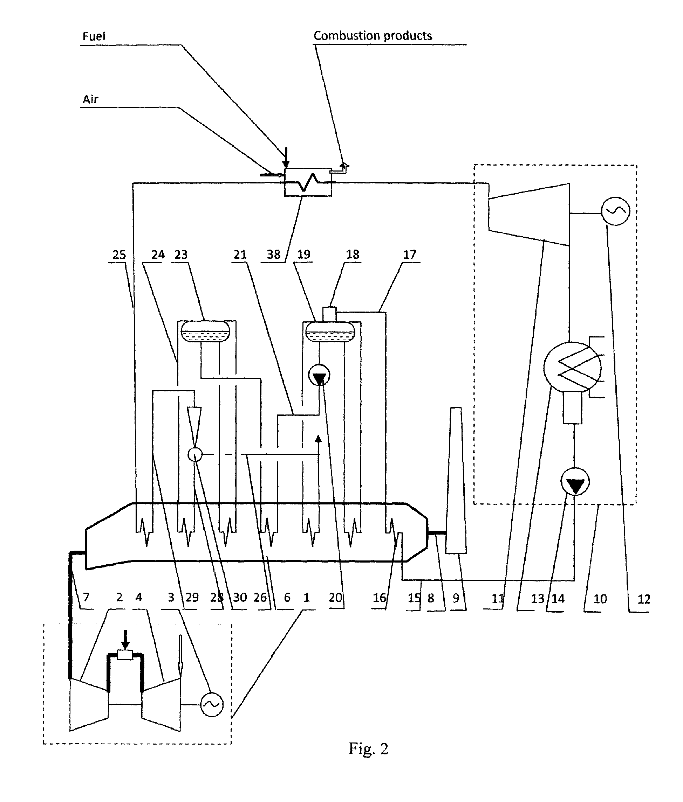

Illustrated on fig. 2 combined-cycle plant has the structure identical to the above-described on fig. 1, but with some differences: both water-steam lines are connected against each other by water jet apparatus 30. Jet apparatus 30 is connected with a help of pipe 26 to the steam-water line of low pressure and with a help of pipe 28 to the line of high pressure.

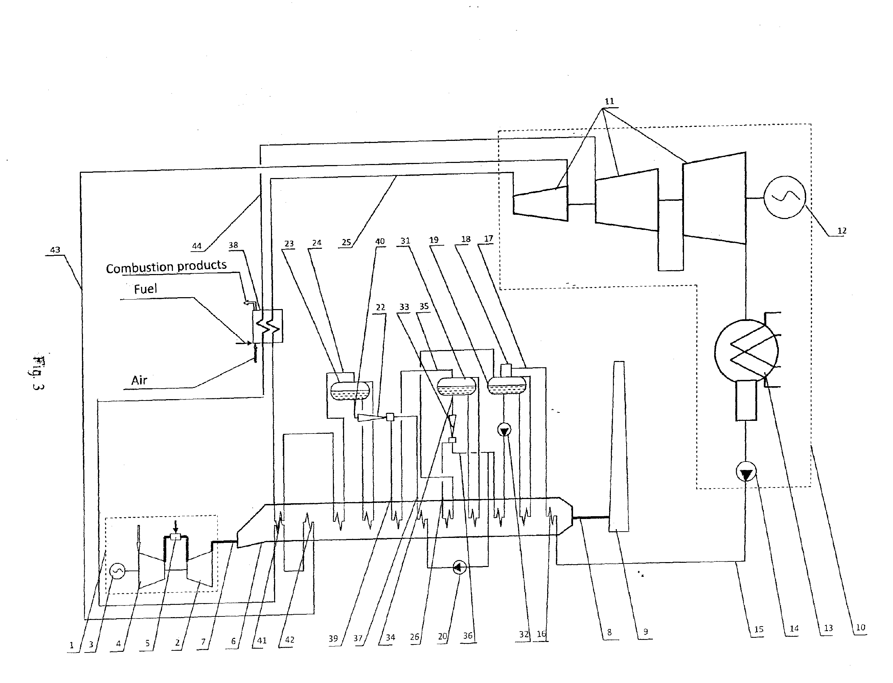

Illustrated on fig. 3 combined-cycle plant generally has the similar structure to the above-described on fig. 1. In this variant combined-cycle plant has waste-heat boiler 6 of three pressure levels equipped with the drum of medium pressure 31 and water-steam line of medium pressure, which consists, besides the drum 31, of: feed pump 32, pipes 34, 35, 36, 37.

Steam-water line of high pressure is connected with steam-water line of medium pressure by water jet apparatus 33, which is connected with the help of the pipe 26 to the line of low pressure and of the pipe 34 to the drum of medium pressure 31.

Steam-water line of high pressure is connected with steam-water line of high pressure by water jet apparatus 22, which is connected with the help of the pipe 39 to the line of medium pressure and with the help of the pipe 40 to the drum of high pressure 23.

Steam turbine unit 10 is equipped with additional line of steam Intermediate reheating, that consists of intermediate superheaters 41, 42 steam lines 43, 44, which connect waste-heat boiler 6 with steam turbine unit 10.

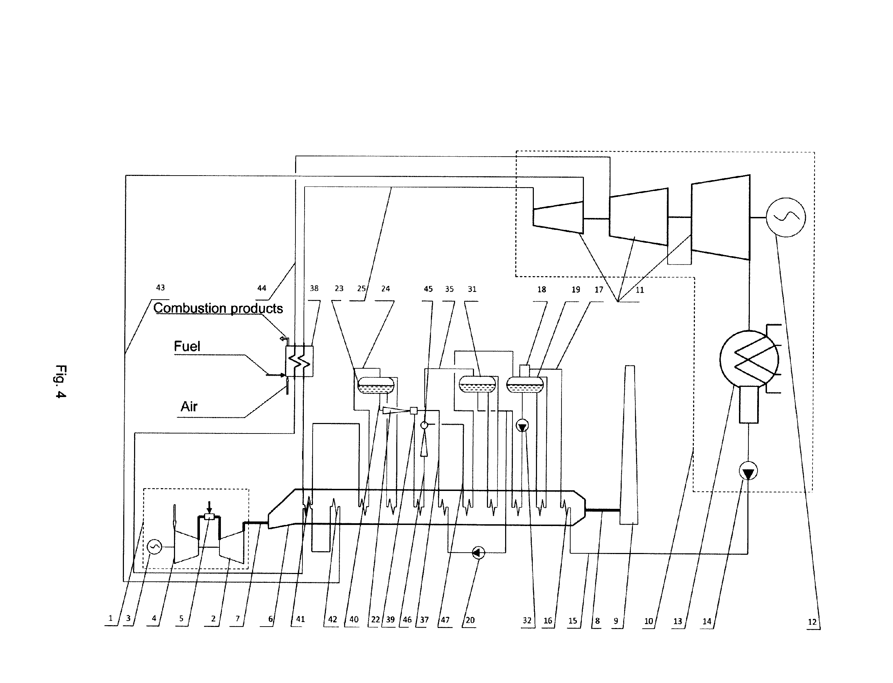

Illustrated on fig. 4 combined-cycle plant generally has the similar structure to the above-described on fig. 3. The difference is that steam-water lines are connected against each other by steam jet apparatus 45 and water jet apparatus 22.

Steam-water line of low pressure is connected with steam-water line of medium pressure by steam jet apparatus 45 and pipe 46. Jet apparatus 45 is connected with a help of pipe 47 to the line of low pressure and with a help of pipe 35 to the drum of medium pressure 31.

Steam-water line of medium pressure is connected with steam-water line of high pressure by water jet apparatus 22, which is connected with a help of the pipe 39 to the line of medium pressure and with a help of the line 40 to the drum of high pressure 23.

Applied combined-cycle plant operates in the following way.

Combustion unit 5 of gas turbine unit 1 (fig. 1) is supplied with air and fuel (for example, natural gas) compressed by compressor 4. Hot combustion gas products are supplied from combustion unit 5 to the gas turbine 2 bringing it in action. Gas turbine 2, in its turn, brings electric power generator 3 in rotation. Then combustion gas products are supplied by gas flue 7 to the steam waste-heat boiler 6, where superheated steam is produced and supplied by the pipe 25, of the line of high pressure into steam-turbine unit 10. When it's necessary, superheater 38 is installed on the pipe 25 additionally heats up the supplied steam by fuel combustion.

Steam turbine unit 10 produces heat and electric energy to satisfy consumers' needs with a help of electric power generator 12 that is brought in rotation by steam turbine 11. After steam turbine 11 exhaust steam is condensed in condenser 13, then in condensate pump 14 and then through the pipe 15 is supplied into the condensate heater 16. Heated condensate by the pipe 17 is supplied through the deaerator 18 into the drum of low pressure 19. Deaerator 18 provides the removal of gas additives out of condensate. From the drum of low pressure 19 by the feed pump 20 through the pipe 21 water is supplied into the water jet apparatus 22. In the jet apparatus 22 water is mixed with the steam that is supplied by the pipe 26 from the line of low pressure. Steam-water mixture from the jet apparatus 22 by the pipe 27 is supplied into the drum of high pressure 23, which is a part of line of high pressure. Produced in the drum of high pressure 23 steam is supplied by the pipe 24 into waste-heat boiler 6 for superheating, and then by the pipe 25 supplied into the steam turbine 11.

After getting through the heat-waste boiler 6 and rejecting heat energy for steam and condensate heating, combustion gas products are supplied into the waste-gas flue 8 and brought out of combined-cycle plant through the smoke flue 9.

Plant, by the scheme on fig. 2 operates identically, except for, the fact that instead of water jet apparatus steam jet apparatus 30 is used.

Plant by the scheme on fig. 3 operates identically to the plant by the scheme illustrated on fig. 1 and differs only in presence of three steam pressure levels. Besides, the steam that gets through the turbine 11 is additionally superheated: steam is supplied by the pipe 43 to the superheaters 42 and 41 installed in waste-heat boiler 6, and then is returned to the turbine 11 by the pipe 44.

Plant by the scheme on fig. 4 operates identically to the plant by the scheme illustrated on fig. 3, and differs only in using of steam jet apparatus 45.

## Claims

1. Combined-cycle plant comprising gas turbine unit, waste-heat steam boiler connected with it along the gas circuit by transitional waste-heat flue that has at least two steam-water lines of different pressure levels, steam turbine unit connected to the steam-water lines by steam and water pipes, condenser, condensate pump, feed pump, deaerator, waste gas flue, smoke flue, junction lines wherein the steam-turbine unit contains steam turbine of one pressure level, herein steam-water line of lower pressure level is connected with adjacent steam-water line of higher pressure level by at least one jet apparatus.

2. Combined-cycle plant according to claim 1, wherein the jet apparatus is constructed with the ability to use steam as an operating environment.

3. Combined-cycle plant according to claim 1, wherein the jet apparatus is constructed with the ability to use water as operating environment.

4. Combined-cycle plant according to claim 1, wherein the waste-heat boiler is equipped with condensate gas heater of steam turbine unit.

5. Combined-cycle plant according to claim 1, wherein the it is equipped by additional superheater, supplied from the waste-heat boiler to the steam-turbine unit.

6. Combined-cycle plant according to claim 1, wherein the at least one of steam-water lines is constructed with the ability to extract steam out of it.

7. Combined-cycle plant according to claim 1, wherein the steam turbine unit is equipped by additional line of intermediate steam reheating.
